Europäisches Patentamt

European Patent Office

Office européen des brevets

(19)

(11) Publication number: **0 092 852**
A1

(12) **EUROPEAN PATENT APPLICATION**

(21) Application number: **83104185.0**

(22) Date of filing: **28.04.83**

(51) Int. Cl.³: **C 13 L 1/02**

(30) Priority: **28.04.82 JP 72490/82**

(43) Date of publication of application:
**02.11.83 Bulletin 83/44**

(84) Designated Contracting States:
**AT DE FR NL SE**

(71) Applicant: Nivoba B.V.
P.O. Box 40
NL-9640 AA Veendam(NL)

(72) Inventor: Holthuis, Johannes Jacobus
Julianalaan 15
Veendam(NL)

(72) Inventor: Kerkhoven, Pieter Hendrik
Berkenlaan 25
Meeden(NL)

(74) Representative: Hoijtink, Reinoud et al,
OCTROOIBUREAU ARNOLD & SIEDSMA Isartorplatz 5
D-8000 München 2(DE)

(54) **Method and device for processing agricultural produce.**

(57) Method and device for grinding and rasping of tubers,
roots, fruit and similar agricultural produce, to pulp one for
sieving out one or more components from this pulp by
sieving, grinding or rasping. In order to prevent formation of
foam due to the presence of proteins the sieving is carried
out in an oxygen-lean surrounding.

FIG.5

EP 0 092 852 A1

"Method and device for processing agricultural produce"

-1-

The invention relates to a method and a device for grinding or rasping of tubers, roots, fruit and similar agricultural produce to a pulp and for separating out one or more components from this pulp by sieving, grinding or rasping being carried out in an oxygen-lean ambience.

Such a method is known from Japanese Patent Application 033049/81. Grinding or rasping is carried out in oxygen-lean surroundings in order to avoid oxidation and hence the undesirable decoloration of the products. Subsequent to grinding or rasping the resultant pulp is sieved out. Due to the presence of proteins foam is often produced, which gives rise to trouble. Hitherto the formation of foam has been overcome by drastically diluting the mixture, by adding foam-inhibiting products or by removing as much cell fluid as possible from the pulp with the aid of centrifugal machines. Each of these processes has its disadvantages. The addition of water has the disadvantage that the cell moisture is strongly diluted, which is not desirable when other products, for example, protein , have to be extracted from the cell fluid. Moreover, the presence of foam or fluid requires a relatively large sieving system.

The invention has for its object to overcome these disadvantages. According to the invention this is achieved by carrying out the sieving operation also in an oxygen-lean ambience, for example, in vacuo. Thus the volume of the resulting pulp is limited and no foam is formed, since the pulp cannot absorb gas. Therefore, the bulk of the sieving apparatus can be restricted. As an alternative, sieving may be performed in an atmosphere of inert gas rather than in vacuo. It may sometimes be desirable to add a small amount of reducing gas to the inert gas. The process may be carried out in a device suitable for carrying out the method comprising a grinding or rasping device, a feeding device for the products to be ground or rasped and a device for conducting away the pulp, the grinding or rasping device being provided with a gas-tight housing, through the wall of which are passed the conduits of the feeding device and those of the evacuating device, whilst the feeding device is provided with a sluice preventing oxygen from being introduced and the outlet conduit is connected with the inlet conduit of a series arrangement of sieves accommodated in a gas-tight housing, through the wall of which are passed a fluid inlet conduit and a fluid outlet conduit and a pulp outlet conduit.

In the fluid outlet conduit and the pulp outlet conduit a pump may serve as a vacuum trap.

The invention will be described with reference to embodiments shown schematically in the drawing, in which

Fig. 1 is a schematic, vertical sectional view of a device for rasping in vacuo,

Fig.2 is a schematic, vertical sectional view of a device for rasping in an inert gas atmosphere,

Fig.3 is a schematic, vertical sectional view of a device in which the inert gas is circulating,

Fig.4 shows a preferred embodiment of a device for rasping in vacuo in a schematic vertical sectional view and

Fig.5 shows schematically the disposition of a sieving device.

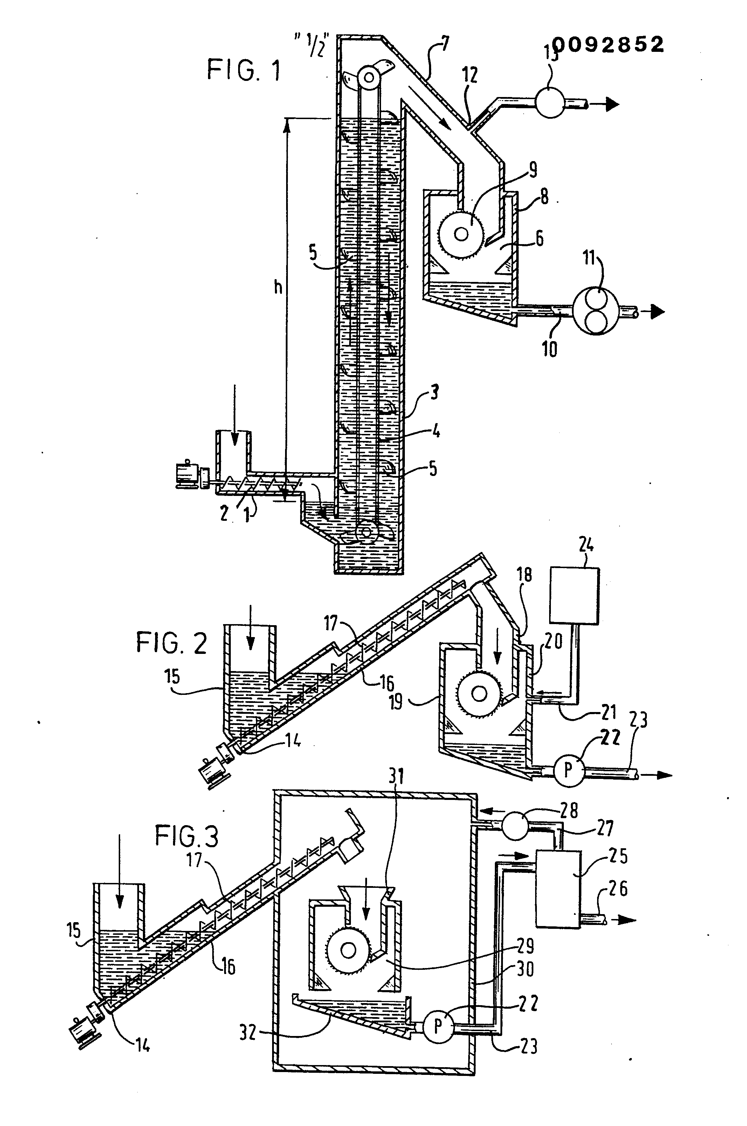

Fig.1 shows schematically a device for rasping in vacuo agricultural products. The products to be rasped, for example, potatoes are supplied by means of a worm conveyor 2 operating in a conduit 1 to the bottom end of a water-filled riser 3. In said riser an elevator 4 having perforated scoops 5 conveys the products across the water to above the manometric rising height of the water and sheds these products into a closed chute 7 leading to a rasping device 6.

The rasping device 6 comprises a gastight housing 8 resistant to internal vacuum, in which a rasp rotor 9 is adapted to rotate. With the bottom side of the housing communicates a delivery device for the rasped pulp comprising a conduit 10 and a pump 11 included therein, which can conduct away the pulp against the atmospheric pressure and serves, in addition, as a hermetic seal.

The riser 3, the closed chute 7 and the housing 8 constitute a system closed from the atmosphere and having a hermetic closure 12 in the part not filled with water or pulp, with which is connected an exhaust pump 13.

When the device is put into operation, the housing 8, the chute 7 and the riser 3 are exhausted by means of the exhaust pump 13, the water thus rising in the riser 3 to a height $h$ of about 10 ms. After the rotor 9 is actuated, the products to be rasped can be supplied through the conduit 1, the elevator and the chute 7 for being rasped in an oxygen-free manner into a gas-free pulp not exposed to oxidation. This pulp is conducted away by means of the pump 11 for being further processed.

Fig.2 shows a device for rasping agricultural pro- ducst in a protective gas atmosphere. The products are supplied to an oxygen-barring sluice in the form of a water trap 14 constituted by a reservoir 15, which communicates on the bo-tom side with an upwardly inclined pipe 16, in which a worm conveyor 17 is arranged with an amount of clearance. The worm conveyor 17 can conduct the products from the water-filled reservoir 15 upwards through the pipe 16 without carrying along an appreciable amount of water.

The worm conveyor 17 terminates at a connection of the pipe 16 with a downwardly extending feeding pipe 18 leading to a rasping device 19, whose housing 20 is closed in a gastight manner, apart from the supply pipe 18, a gas supply conduit 21 and a pulp delivery conduit 23 including a pump 22.

The pipe 16, the downwardly extending feeding pipe 18, the housing 20, the delivery conduit 23 and the pump 22 interconnected in a gastight manner so that after the supply of a protective gas from a stock vessel 24 or a generator of protective gas in a rasping device a protective gas atmosphere can be maintained. The penetration of oxygen is prevented by the water trap 14 in the feeding device and the pump 22 in the delivery device.

If the gases absorbed in the pulp during rasping are disturbing the further processing of the pulp, a gas separator 25 can be arranged in the delivery conduit 23 downstream the pump.

This embodiment is illustrated in fig.3. The pulp from which the gas separator has extracted the gas is conducted away through a conduit 26 and the gas is fed back through a return conduit 27 with the blower 28 to the rasping device so that the protective gas is recycled.

Fig.3 shows moreover, a conventional rasping device 29. In order to adapt the same to the method in accordance with the invention it is arranged in a separate gastight housing 30. In this housing opens out a feeding device 14 to 17 as described with reference to fig.2 and the products to be rasped are shed into a filling funnel 31 of the rasping equipment 29. The pulp formed by the rasping device is conducted away from a pulp collecting :trough 32 via the outlet conduit 23 including a pump 22.

Although in the foregoing rasping devices are described, it is a matter of course, that grinding devices such as hammer mills, beater mills, tine-disc crushers may be used. The choice thereof will usually depend upon the pro-u ducts to be worked and the aftertreatment thereof.

In the embodiment shown in fig.1 a hermetic closing member may be used as a variant comprising a riser 10 ms odd high, in the bottom end of which opens out a feeding conduit for the products to be ground or rasped. The riser is provided with a conventional pump for pumping up a mixture of water and products to be ground, for example, potatoes so that at the top of the riser the mixture slightly exceeds the manometric height of the rise. The mixture flows over into an outlet gutter with a perforated bottom. Like in fig.1 the outlet gutter leads to the grinding or rasping device and beneath the perforated bottom a collecting trough is arranged and connected on the bottom side with a delivery conduit leading downwards to the bottom side of the riser. In this way the water is pumped around.

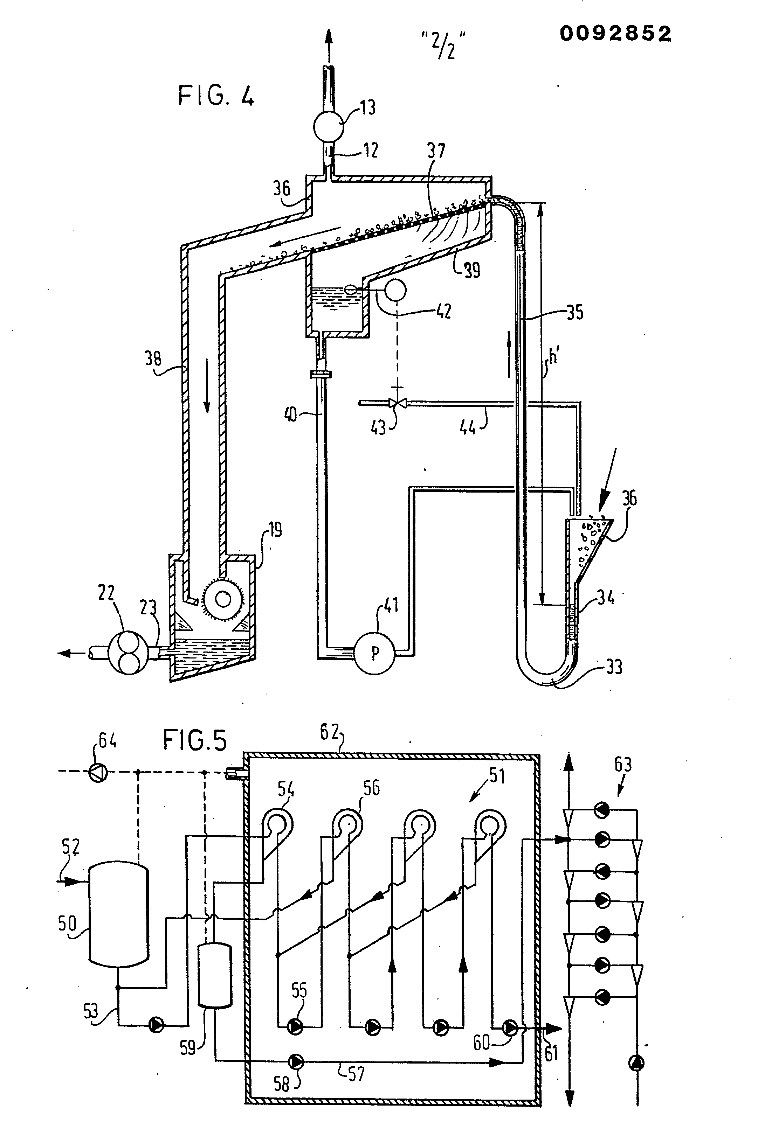

Fig.4 is a schematic, vertical sectional view of a preferred vacuum rasping device . A U-shaped pipe 33 having a short limb 34 and a long limb 35 is filled with water; Into the short limb 34, which is open at the top end and which is provided with a feeding funnel 36, are introduced the products to be ground. Since the vertical distance $\underline{h}'$ between the water level in the short limb and the top side of the long limb is smaller than the hydrostatic height, which corresponds to the vacuum in the rasping device, the water in the U-shaped pipe will flow towards the top end of the long limb 35 and carry along the products to be rasped.

The mixture of products to be ground and water flows from the long limb 35 into a separation chamber 36 having an inclined sieve bottom 37 allowing only water to pass, which communicates with a delivery conduit 38 for passing the products to the vacuum grinding or rasping device 19.

In the hermetically closed grinding or rasping device the products are ground or rasped to a pulp, which is conducted away through an outlet conduit 23 including a pump 22.

The water of the mixture flows through the sieve bottom 37 into a collecting trough 39 having a down-comer 40 in which a pump 41, for example, a centrifugal pump is arranged for pumping the fluid back to the short limb 34 of the U-shaped pipe 33.

Beneath the sieve bottom 37 is arranged a scanner 42, which is adjustable in a direction of height, for example, a float for monitoring the fluid level, said scanner being coupled with a closing member 43 in a fluid feeding conduit 44 opening out in the short limb 34. By exhausting the system during the start with the aid of an exhaust pump 13 for the vacuum connection 12, the water rises in the long limb 35 and drops in the short limb 34 until the water flows over at the top of the long limb to the separation chamber 36, from where it flows through the sieve bottom 37 via the collecting trough 39 through a down.comer 40. In this down-comer the fluid level is kept lower by the pump 41 than in the long limb 35. The water pumped down through the down-comer is conducted away into the open short limb 34 of the U-shaped pipe.

The pulp outlet conduits in each of the systems shown in Figs. 1 to 4 may, in accordance with the invention, be connected with a sieving device with the interposition of a buffer reservoir 50. The buffer reservoir is provided with a pulp inlet conduit 52. Through the outlet conduit 53 the pulp is pumped out of the reservoir towards the first(54) of the sequence of sieves 7. The sievers are preferably of the stationary type with sieve bends, in which the fluid is passed with high speed by the pump pressure over the sieve surface. Other types of sieves may also be used. After sieving the pulp is pumped towards the next sieve 56 with the aid of the pump 55. As usual the fluid with any fine solid substance is pumped in a counter-flow to a preceding sieve in order to repumpt the coarser solids separated out on the sieve. Finally, the cell fluid is evacuated through the conduit 57 by using the pressure of the pump 58. A buffer 59 may be arranged between the sieving device and the conduit 57. The resultant pulp is conducted away with the aid of the pump 60 through the conduit 61.

According to the invention the sieving system is accommodated in a gas-tight housing 62 shown schematically in figure 5. The exhaust pump 64 maintaining said parts exhausted is connected with the housing 62 and the buffers 50 and 59. The pumps 58 and 60 not only serve as pumps but also as vacuum traps. The cell fluid is conveyed to a washing system 63, which is built up in known manner from hydrocyclones and/or centrigual devices in order to separate cell fluid, water and starch from one another. This washing system need not operate in vacuo.

As an alternative, the sieving system and the associated buffers may be in an inert gas atmosphere rather than in vacuo or in atmosphere containing a reducing gas.

It is furthermore possible to provide each sieve with an individual gas-tight housing instaed of arranging them in common in one gas-tight housing. Each gas-tight housing is then connected with the exhaust pump.

-1-

CLAIMS

1. A method of grinding or rasping tubers, roots, fruit and similar agricultural produce to pulp and of separating out one or more components from said pulp by sieving, grinding or rasping being carried out in an oxygen-lean ambience, characterized in that sieving is also carried out in oxygen-lean surroundings.

2. A method as claimed in Claim 1 characterized in that sieving is carried out in vacuo.

3. A method as claimed in claim 1 characterized in that sieving is carried out in an inert gas atmosphere.

4. A method as claimed in claim 1 characterized in that sieving is carried out in a reducing gas atmosphere.

5. A device for carrying out the method claimed in claims 1 to 4 comprising a grinding or rasping device for the products to be ground or rasped and a pulp outlet device, the grinding or rasping device being provided with a gas-tight housing, through the wall of which are passed the conduits of the feeding device and of the evacuating device, said feeding device being provided with a sluice preventing oxygen from being introduced, characterized in that the outlet conduit is connected with the inlet conduit of a series arrangement of sieves accommodated in a gas-tight housing, through the wall of which are passed a fluid inlet conduit and a fluid outlet conduit and a pulp outlet conduit.

6. A device as claimed in claim 5 characterized in that the fluid outlet conduit and the pulp outlet conduit include a pump serving as a vacuum trap.

FIG. 1

FIG. 2

FIG. 3

0092852

11415 - 13

FIG. 4

FIG.5

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | STARCH-STÄRKE, vol. 33, no. 1, January 1981, pages 14-17, Verlag Chemie, Weinheim, DE. J.J. HOLTHUIS et al.: "Möglichkeiten und Vorteile der Vakuumreibe in der Kartoffelstärkeindustrie" * Page 17, right-hand column, paragraph 2 * | 1-6 | C 13 L 1/02 |
| | --- | | |
| A | EP-A-0 025 627 (NIVOBA B.V.) | | |
| | --- | | |
| A | FR-A-2 396 516 (M. BEAUVAIS) | | |
| | --- | | |
| A | GB-A- 853 773 (CORN PRODUCTS COMPANY) | | TECHNICAL FIELDS SEARCHED (Int. Cl. ³) |
| | ----- | | C 13 L<br>A 23 N<br>B 02 C<br>A 23 P<br>A 23 L |

The present search report has been drawn up for all claims

| Place of search | Date of completion of the search | Examiner |
|---|---|---|
| THE HAGUE | 01-08-1983 | NEHRDICH H.J |